# EUROPEAN PATENT APPLICATION

(11) **EP 4 583 258 A1**
(43) Date of publication of application: **09.07.2025**
(21) Application number: 22964693.0
(22) Date of filing: 07.11.2022
(51) Int. Cl.: H01M 50/102

(54) **CASING, BATTERY CELL, BATTERY, AND ELECTRICAL APPARATUS**

(71) Applicant: CONTEMPORARY AMPEREX TECHNOLOGY (HONG KONG) LIMITED, Hong Kong (HK)
(72) Inventor: WU, Ningsheng, Ningde, Fujian 352100 (CN); YANG, Kaihuan, Ningde, Fujian 352100 (CN); BAI, Lulu, Ningde, Fujian 352100 (CN); MEI, Xiang, Ningde, Fujian 352100 (CN); YANG, Daowei, Ningde, Fujian 352100 (CN); LI, Quankun, Ningde, Fujian 352100 (CN)
(74) Representative: Ziebig Hengelhaupt Intellectual Property Attorneys Patentanwaltskanzlei PartGmbB
(86) International application number: PCT/CN2022/130408
(87) International publication number: WO 2024/098215

(57) **Abstract**

Provided are a housing, a battery cell, a battery, and an electric device, which relate to the field of battery technologies. The housing includes a bottom plate, a side plate, and a transition rounded corner. The bottom plate has a first inner wall surface. The first inner wall surface includes a first surface and a second surface. The second surface is located at an outer peripheral side of the first surface. The side plate has a second inner wall surface. The transition rounded corner has a third inner wall surface. The first surface and the second surface are connected to each other by the third inner wall surface. At least one of the second surface and the third inner wall surface has an avoidance recess configured to avoid an edge of the cell.

## Description

### FIELD

The present disclosure relates to the field of battery technologies, and more particularly, to a housing, a battery cell, a battery, and an electric device.

### BACKGROUND

In the related art, a transition rounded corner is formed at a bending position during a molding process of a housing of a battery cell, which results in an uneven inner bottom of the housing.

To this end, in some technologies, a bottom support plate is usually separately provided at the housing to raise the cell to a predetermined height, which aims to prevent interference between an edge of the cell and an inner wall surface of the housing, which would result in crushing and decarburization of the edge of the cell. In addition, the bottom support plate needs to be assembled separately, resulting in a more complicated assembly process and a higher cost of the battery cell.

### SUMMARY

The present disclosure aims to solve at least one of the problems in the related art. To this end, embodiments of the present disclosure provide a housing. The housing can prevent a cell from being crushed while simplifying a structure of a battery cell.

Embodiments of the present disclosure further provide a battery cell having the housing as described above.

Embodiments of the present disclosure further provide a battery having the battery cell as described above.

Embodiments of the present disclosure further provide an electric device having the battery as described above.

According to embodiments of the present disclosure, a housing for accommodating a cell of a battery cell is provided. The housing includes a bottom plate, a side plate, and a transition rounded corner. The side plate is connected to an outer edge of the bottom plate. The transition rounded corner is transitionally connected between the bottom plate and the side plate. An accommodation cavity is defined by the transition rounded corner, the side plate, and the bottom plate, and the accommodation cavity is configured to accommodate the cell. The bottom plate has a first inner wall surface facing towards the accommodation cavity. The first inner wall surface includes a first surface and a second surface, and the second surface is located at an outer peripheral side of the first surface. The side plate has a second inner wall surface facing towards the accommodation cavity. The transition rounded corner has a third inner wall surface facing towards the accommodation cavity, and the second surface and the second inner wall surface are connected by the third inner wall surface. At least one of the second surface and the third inner wall surface has an avoidance recess configured to avoid an edge of the cell.

In the housing according to the embodiments of the present disclosure, by forming the avoidance recess on at least one of the second surface of the bottom plate and the third inner wall surface of the transition rounded corner, a distance between the cell and the inner wall surface of the housing can be increased. In this way, the edge of the cell is prevented from being crushed by the inner wall surface of the housing. Therefore, in the present disclosure, it is not necessary to provide a separate bottom support plate on the housing to raise the cell by a predetermined height, thus the assembling and fixing processes of the bottom support plate can be saved, reducing the cost of mounting the bottom support plate such as cost of hot melt for fixing the bottom support plate on the housing. Therefore, the number of components of the battery cell can be reduced, and thus a structure of the battery cell is simplified.

In some embodiments, the housing has a first reference arc-shaped plane and a reference flat plane. The first reference arc-shaped plane is tangent to the second inner wall surface and the reference flat plane, respectively. The third inner wall surface is recessed relative to the first reference arc-shaped plane to allow the avoidance recess to be formed on the third inner wall surface. As a result, while ensuring that the edge of the cell has no interference with the bottom plate and the transition rounded corner, a structure of the avoidance recess can be simplified and thus the processing is facilitated.

In some embodiments, the first surface and the second surface are both coplanar with the reference flat plane; or at least one of the first surface and the second surface protrudes from the reference flat plane to form a support protrusion. Therefore, the first surface and the second surface can be arranged flexibly, which facilitates the housing meeting differentiated needs of different battery cells.

In some embodiments, the housing has a first reference arc-shaped plane and a reference flat plane. The first reference arc-shaped plane is tangent to the second inner wall surface and the reference flat plane, respectively. The second surface is recessed relative to the reference flat plane to allow the avoidance recess to be formed on the second surface. The first surface protrudes from the reference flat plane to form a support protrusion. Therefore, the cell can be raised through the support protrusion by a predetermined height to further keep the edge of the cell away from the transition rounded corner and the second surface.

In some embodiments, the housing has a reference flat plane. An arc-shaped plane on which the third inner wall surface is located is tangent to the second inner wall surface and the reference flat plane, respectively. At least one of the first surface and the second surface protrudes from the reference flat plane to form a support protrusion. Therefore, the cell can be raised through the support protrusion by a predetermined height to further keep the edge of the cell away from the transition rounded corner and the second surface.

In some embodiments, the arc-shaped plane on which the third inner wall surface is located has a first end and a second end in a circumferential direction, respectively. The first end is connected to the second inner wall surface, and the second end is connected to the reference flat plane. The second surface protrudes from the reference flat plane. The support protrusion extends to a position between the first end and the second end. Therefore, while ensuring that the edge of the cell can avoid the housing, the structural strength of the bottom plate can be easily ensured.

In some embodiments, the support protrusion has a projected area s1 on a plane perpendicular to a thickness direction of the bottom plate, and the bottom plate has a projected area s on the plane perpendicular to the thickness direction of the bottom plate, where 0.1≤s1/s≤0.9. Therefore, while ensuring the reliable arrangement of the cell, the support protrusion can be easily design variously.

In some embodiments, at least one of the first surface and the second surface protrudes from the reference flat plane to form a support protrusion, and the support protrusion protrudes from the reference flat plane by a height h, where 0.1 mm≤h≤2.0 mm. Therefore, it can be ensured that the cell can be raised through the support protrusion by a suitable height to allow the edge of the cell not to interfere with the inner wall of the housing.

In some embodiments, the support protrusion includes at least one rib, and each of the at least one rib is of an elongated shape extending along a straight line or a curved line. As a result, a support area of the support protrusion can be flexibly adjusted.

In some embodiments, the at least one rib includes a plurality of ribs. The plurality of ribs includes at least one first rib and at least one second rib. Each of the at least one first rib is of an elongated shape extending in a first direction, and each of the at least one second rib is of an elongated shape extending in a second direction intersecting the first direction. Therefore, it can be ensured that the cell is stably supported by the plurality of ribs.

In some embodiments, the at least one rib includes at least one third rib of a ring shape extending in a circumferential direction of the bottom plate. Therefore, it can be ensured that the cell is stably supported by the third rib.

In some embodiments, the at least one third rib includes a plurality of third ribs coaxially arranged. Therefore, it can be further ensured that the cell is stably supported by the plurality of third ribs.

In some embodiments, each of the at least one rib extends continuously or intermittently. Therefore, the support area of the support protrusion can be further flexibly adjusted.

In some embodiments, the support protrusion is a solid protrusion and is formed into a circular structure, an elliptical structure, or a polygonal structure. As a result, the support protrusion is flexibly designed, thereby facilitating meeting actual differentiated needs.

In some embodiments, at least one of the first surface and the second surface is configured to abut with the cell; and/or at least one of the first surface and the second surface has an accommodation groove configured to accommodate an electrolyte. As a result, it is easy to balance the stable arrangement of the cell and a wetting effect of the electrolyte on a bottom of the cell.

In some embodiments, the bottom plate has an outer wall surface facing away from the accommodation cavity, and the outer wall surface is formed into a flat surface. As a result, the processing of the outer wall surface is simplified and the arrangement of the battery is facilitated.

In some embodiments, the housing has a first reference arc-shaped plane and a reference flat plane. The first reference arc-shaped plane is tangent to the second inner wall surface and the reference flat plane, respectively. The first surface protrudes from the reference flat plane to form a support protrusion. The bottom plate has an outer wall surface facing away from the accommodation cavity, and the outer wall surface has a first recess opposite to the support protrusion. Therefore, a material utilization rate of the bottom plate can be increased.

In some embodiments, the first recess has a depth t, where 0<t≤2 mm; and/or the support protrusion protrudes from the reference flat plane by a height equal to the depth of the first recess. Therefore, the structural strength of the bottom plate is ensured.

In some embodiments, the bottom plate has an outer wall surface facing away from the accommodation cavity, and at least one reinforcing rib is formed at the outer wall surface. Thus, the structural strength of the bottom plate can be improved to avoid too large deformation of the bottom plate, which may cause a safety problem due to the deglueing between the bottom of the housing and a pack interface.

In some embodiments, each of the at least one reinforcing rib is of an elongated shape, which is simple in structure and easy to be arranged.

In some embodiments, the outer wall surface has a first recess, and the reinforcing rib is formed on a bottom wall of the first recess, which facilitates saving an occupied space of the housing.

In some embodiments, a height of the reinforcing rib is smaller than or equal to a depth of the first recess. Accordingly, the reinforcing rib does not protrude from the outer wall surface, which saves the occupied space of the housing.

In some embodiments, the first inner wall surface further has a second recess, and the second recess is opposite to the reinforcing rib in a thickness direction of the bottom plate. Therefore, the material utilization rate of the bottom plate can be increased.

In some embodiments, the bottom plate is an integrated stamping part, which facilitates processing and molding.

According to some embodiments of the present disclosure, a battery cell is provided. The battery cell includes the housing according to the above embodiments.

In some embodiments, the battery cell further includes a cell. The cell is accommodated in the accommodation cavity of the housing. The cell has a bottom wall, a side wall, and a connection wall. The bottom wall and the side wall are connected to each other by the connection wall, and the connection wall extends in a length direction of the transition rounded corner. The cell further has a second reference arc-shaped plane tangent to the bottom wall and the side wall, respectively. The connection wall is radially located inside of the second reference arc-shaped plane.

According to some embodiments of the present disclosure, a battery is provided. The battery includes a plurality of battery cells, and each of the plurality of battery cells is the battery cell according to the above embodiments.

According to some embodiments of the present disclosure, an electric device is provided. The electric device includes the battery according to the above embodiments. The battery is configured to provide electric energy.

Additional embodiments of the embodiments of the present disclosure will be given at least in part in the following description, or become apparent at least in part from the following description, or can be learned from practicing of the embodiments of the present disclosure.

### BRIEF DESCRIPTION OF THE DRAWINGS

The above and/or additional embodiments of the present disclosure will become more apparent and more understandable from the following description of embodiments taken in conjunction with the accompanying drawings.
FIG. 1 is a schematic view of an electric device according to some embodiments of the present disclosure.
FIG. 2 is an exploded view of a battery according to some embodiments of the present disclosure.
FIG. 3 is a schematic view of a battery module shown in FIG. 2.
FIG. 4 is an exploded view of a battery cell according to some embodiments of the present disclosure.
FIG. 5 is another schematic view of the battery cell shown in FIG. 4.
FIG. 6 is a sectional view taken along line A-A in FIG. 5.
FIG. 7a to FIG. 7k are partial sectional views of a housing according to various embodiments of the present disclosure.
FIG. 8 is a sectional view of the housing shown in FIG. 7i.
FIG. 9 is an enlarged view of part C in FIG. 8.
FIG. 10 is a bottom view of the housing shown in FIG. 8.
FIG. 11a to FIG. 11g are top views of housings according to various embodiments of the present disclosure.
FIG. 12 is a partial sectional view of a housing according to some embodiments of the present disclosure.
FIG. 13 is a sectional view of a battery cell according to some embodiments of the present disclosure.
FIG. 14 is an enlarged view of part D in FIG. 13.
FIG. 15 is a sectional view of the housing shown in FIG. 13.
FIG. 16 is another sectional view of the housing shown in FIG. 15.
FIG. 17 is an enlarged view of part E in FIG. 16.
FIG. 18 is a bottom view of the housing shown in FIG. 16.
FIG. 19 is a top view of a housing according to some embodiments of the present disclosure.
FIG. 20 is a sectional view taken along line F-F in FIG. 19.
FIG. 21 is an enlarged view of part G in FIG. 20.
FIG. 22 is a bottom view of the housing shown in FIG. 19.
FIG. 23 is a bottom view of a housing according to some embodiments of the present disclosure.
FIG. 24a to FIG. 24j are partial sectional views of a battery cell according to various embodiments of the present disclosure.

Reference numerals of the accompanying drawings:
electric device 1000; battery 200; controller 300; motor 400;
battery cell 100; battery module 101;
case 102; first case portion 102a; second case portion 102b; accommodation space 102c;
housing 1; avoidance recess 1a; accommodation cavity 10; opening 10a;
first reference arc-shaped plane R1; first end R11; second end R12; reference flat plane R2;
bottom plate 11;
first inner wall surface 11a; first surface 11b; second surface 11c; accommodation groove 11d;
outer wall surface 11e; first recess 11f; second recess 11g;
support protrusion 111; rib 1111; first rib 1111a; second rib 111b; third rib 111c;
reinforcing rib 112;
side plate 12; second inner wall surface 12a;
transition rounded corner 13; third inner wall surface 13a;
top cover 2;
cell 3; second reference arc-shaped plane R3;
main body 31; tab 32; bottom wall 311; side wall 312; connection wall 313;
insulation film 4; first insulation portion 41; second insulation portion 42.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

Various embodiments or examples for implementing different structures of the present disclosure are provided below. In order to simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, disclosures of other processes and/or the use of other materials are conceivable for those of ordinary skill in the art.

Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions. Terms "first", "second", etc. thereof in the specification, claims, and accompanying drawings of the present disclosure are used to distinguish different objects, and does not describe a particular order, or a primary or secondary relationship.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments.

In the description of the embodiments of the present disclosure, it should be noted that, unless otherwise clearly specified and limited, terms such as "install", "connect", "connect to", "attach" and the like should be understood in a broad sense. For example, it may be a fixed connection or a detachable connection or connection as one plate; direct connection or indirect connection through an intermediate; internal communication of two components or the interaction relationship between two components. For those skilled in the art, the specific meaning of the above-mentioned terms in the embodiments of the present disclosure can be understood according to specific circumstances.

In the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In some embodiments of the present disclosure, a battery cell 100 may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell 100 may be in a shape of a cylinder, a flat body, a cuboid or other shapes, which are not limited in the embodiments of the present disclosure. The battery cell 100 is generally classified into three types based on a packaging method, including a cylinder-shaped battery cell, a square-shaped battery cell, and a soft-pack battery cell, which are not limited in the embodiments of the present disclosure.

A battery 200 as described in the embodiments of the present disclosure refers to a single physical module including one or more battery cells 100 and configured to provide higher voltage and capacity. For example, the battery 200 as described in the present disclosure may be a battery module 101 or a battery pack. The battery 200 generally includes a case 102 for packing one or more battery cells 100. The case 102 can prevent liquid or other foreign matter from affecting charging or discharging of the battery cell 100. Inn some other embodiments, the battery 200 may not include the case 102.

For example, the battery cell 100 includes a cell 3 and an electrolyte. The cell 3 is composed of a positive electrode plate, a negative electrode plate, and a separator. An operation of the battery cell 100 mainly relies on a movement of metallic ions between the positive electrode plate and the negative electrode plate. The positive electrode plate includes a positive current collector and a positive active material layer. The positive active material layer is coated on a surface of the positive current collector. A part of the positive current collector that is not coated with the positive active material layer protrudes from a part of the positive current collector that has been coated with the positive active material layer. The part of the positive current collector that is not coated with the positive active material layer serves as a positive tab. Taking a lithium-ion battery as an example, the positive current collector may be made of aluminum, and a positive electrode active material may be lithium cobalt oxide, lithium iron phosphate, ternary lithium, lithium manganate, etc. The negative electrode plate includes a negative current collector and a negative active material layer. The negative active material layer is coated on a surface of the negative current collector. A part of the negative current collector that is not coated with the negative active material layer protrudes from a part of the negative current collector that has been coated with the negative active material layer. The part of the negative current collector that is not coated with the negative active material layer serves as a negative tab. The negative current collector may be made of copper, and the negative electrode active material may be carbon, silicon, etc. To ensure no fusing occurs during flowing of a high current, a plurality of positive tabs is provided and stacked together, and a plurality of negative tabs is provided and stacked together.

The battery cell 100 further includes a housing 1 and a top cover 2. The housing 1 has an opening 10a. The top cover 2 covers the opening 10a and is hermetically connected to the housing 1 to allow the housing 1 and the top cover 2 to form an accommodation cavity 10 for accommodating the cell 3 and the electrolyte. The housing 1 may be made of a material such as aluminum, aluminum alloy, or plastic.

The separator may be made of Polypropylene (PP), Polyethylene (PE), etc. In some other embodiments, it is not necessary to provide the separator for the battery cell 100 using a solid electrolyte.

It is found that during a molding of the housing of the battery cell, a transition rounded corner would be formed at a bending position. Therefore, a bottom of the housing is not flat, and usually a bottom support plate is separately disposed at the housing to avoid interference between an edge of the cell and an inner wall surface of the housing, resulting in complicated assembly steps.

In view of this, the present disclosure provides a technical solution. While ensuring structural strength and use reliability of the housing 1, a distance between the cell 3 and an inner wall surface of the housing 1 can be increased by forming an avoidance recess 1a on at least one of a second surface 11b of a bottom plate 11 and a third inner wall surface 13a of a transition rounded corner 13. In this way, there is a suitable distance between an edge of the cell 3 and the transition rounded corner 13 of the housing 1. Therefore, the edge of the cell 3 can be prevented from being crushed by the transition rounded corner 13, which may result in decarburization of the cell 3, reduced capacity of the cell 3, and short-circuit of the cell 3. In the present disclosure, it is not necessary to provide a separate bottom support plate on the housing 1 to raise the cell 3 by a predetermined height, thus the assembling and fixing processes of the bottom support plate can be saved, reducing the cost of mounting the bottom support plate such as cost of hot melt for fixing the bottom support plate on the housing 1. Therefore, the number of components of the battery cell 100 can be reduced, and thus a structure of the battery cell 100 is simplified.

The technical solution described in the embodiments of the present disclosure is applicable to a battery 200 and an electric device 1000 using the battery 200. The battery 200 is configured to provide electric energy.

The electrical device 1000 may be a vehicle, a mobile phone, a portable device, a notebook computer, a ship, a spacecraft, an electric toy, an electric tool, and the like. The vehicle may be a fuel vehicle, a gas vehicle, or a new energy vehicle. The new energy vehicle may be a pure electric vehicle, a hybrid vehicle, an extended range vehicle, and the like. The spacecraft includes an airplane, a rocket, a space shuttle, a spacecraft, and the like. The electric toy includes a stationary electric toy or a movable electric toy, such as a game player, an electric vehicle toy, an electric ship toy, an electric airplane toy, etc. The power tool includes a metal cutting power tool, a grinding power tool, an assembly power tool, and a railway power tool, such as an electric drill, an electric grinder, an electric wrench, an electric screwdriver, an electric hammer, an impact drill, a concrete vibrator, and an electric planer. The above-described electric device 1000 is not specifically limited by the embodiments of the present disclosure.

For convenience of explanation, the following embodiments will be described by taking the electric device 1000 as an example of a vehicle.

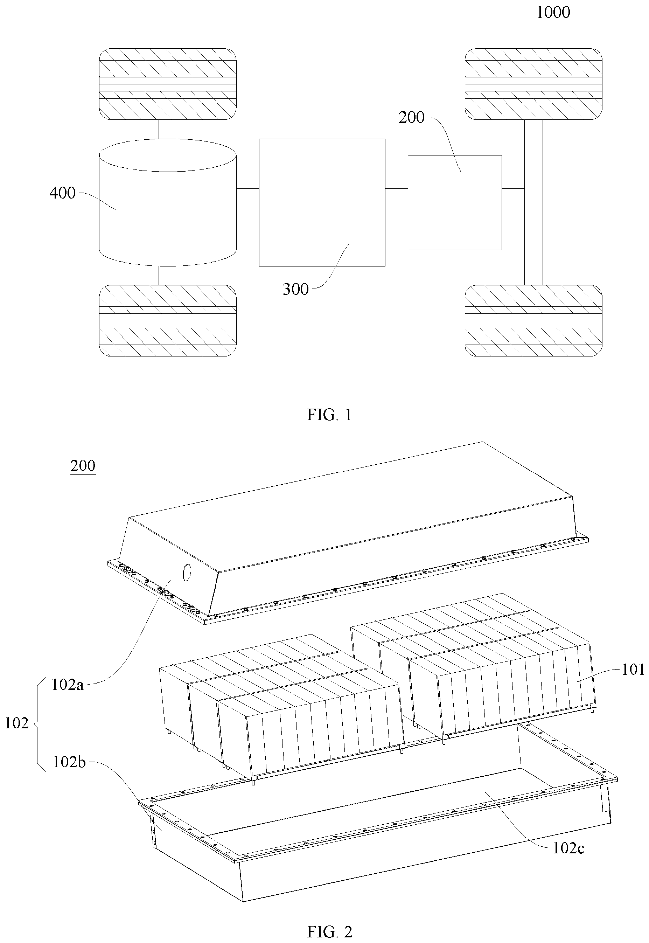

FIG. 1 is a schematic view showing a structure of the vehicle according to some embodiments of the present disclosure.

As shown in FIG. 1, the vehicle is provided with a battery 200. The battery 200 may be disposed at a bottom, a head, or a tail of the vehicle. The battery 200 may be used to supply power to the vehicle. For example, the battery 200 may serve as an operation power source of the vehicle.

The vehicle may further include a controller 300 and a motor 400. The controller 300 is configured to control the battery 200 to supply power to the motor 400, such as for operating power demand when the vehicle is started, navigated, and driven.

In some embodiment of the present disclosure, the battery 200 may be used not only as an operation power source for the vehicle, but also as a driving power source for the vehicle, replacing or partially replacing fuel oil or natural gas to provide driving power for the vehicle.

FIG. 2 is a schematic view showing the battery 200 according to some embodiments of the present disclosure.

As shown in FIG. 2, the battery includes a case 102 and a battery cell 100 accommodated in the case 102.

The case 102 is configured to accommodate the battery cell 100 and may have various structures. In some embodiments, the case 102 may include a first case portion 102a and a second case portion 102b. The first case portion 102a and the second case portion 102b are assembled together. The first case portion 102a and the second case portion 102b together define an accommodation space 102c for accommodating the battery cell 100. The second case portion 102b may be a hollow structure having an open at an end of the second case portion 102b. The first case portion 102a is a plate-shaped structure, and covers an open side of the second case portion 102b to form the case 102 having the accommodation space 102c. In addition, each of the first case portion 102a and the second case portion 102b may be a hollow structure having an opening at one side. An open side of the first case portion 102a covers the open side of the second case portion 102b to form the case 102 having the accommodation space 102c. In some other embodiments, the first case portion 102a and the second case portion 102b may be of various shapes, such as cylinders, rectangles, etc.

To improve sealing property at a connection between the first case portion 102a and the second case portion 102b, a seal, such as a sealant or a sealing ring, may be disposed between the first case portion 102a and the second case portion 102b.

In a case where the first case portion 102a covers a top of the second case portion 102b, the first case portion 102a may further be referred to as an upper case cover, and the second case portion 102b may further be referred to as a lower case.

The battery 200 may include one or more battery cells 100. When the battery 200 includes a plurality of battery cells 100, the plurality of battery cells 100 may be connected in series, in parallel, or in hybrid. A hybrid connection may mean that the plurality of battery cells 100 are connected in series and parallel. The plurality of battery cells 100 may be directly connected in series, in parallel, or in hybrid, and then the entire connected battery cells 100 are accommodated in the case 102. In some other embodiments, the plurality of battery cells 100 may be connected in series, in parallel, or in hybrid to form a battery module 101, and then a plurality of battery modules 101 may be connected in series, in parallel, or in hybrid and then the connected battery modules 101 are accommodated in the case 102.

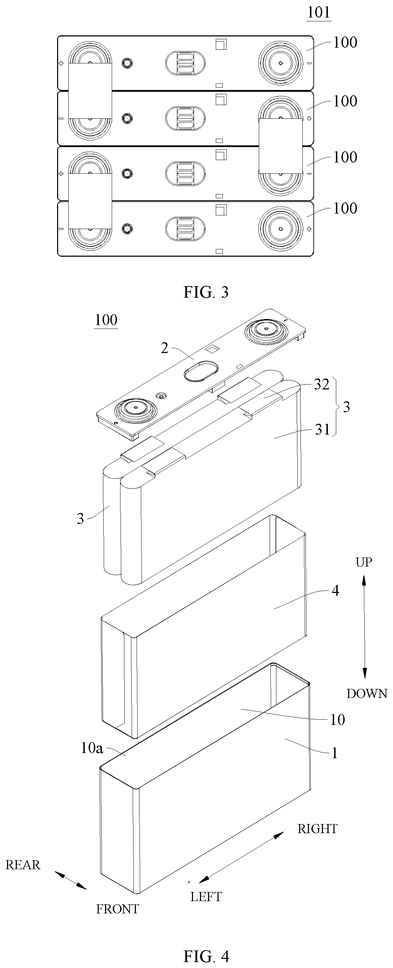

FIG. 3 is a schematic view of the battery module 101 according to some embodiments of the present disclosure.

In some embodiments, the battery module 101 includes a plurality of battery cells 100. The plurality of battery cells 100 are connected in series, in parallel, or in hybrid to form the battery module 101, and then a plurality of battery modules 101 are connected in series, in parallel, or in hybrid to form the connected battery modules 101, and then the entire connected battery modules 101 are accommodated in the case 102. The plurality of battery cells 100 of the battery module 101 may be electrically connected by a busbar to realize a parallel connection, series connection or hybrid connection of the plurality of battery cells 100 of the battery module 101.

FIG. 4 is a schematic view of the battery cell 100 according to some embodiments of the present disclosure.

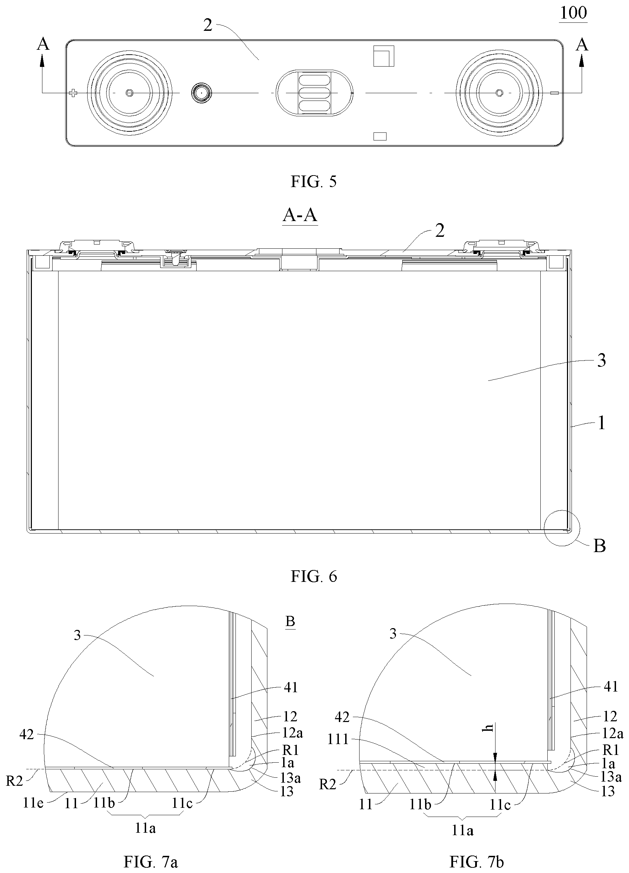

As shown in FIG. 4 and FIG. 5, the battery cell 100 includes a cell 3, a housing 1, and a top cover 2. An opening 10a is formed at an end of the accommodation cavity 10 away from the bottom plate 11. The top cover 2 covers the opening 10a. The top cover 2 is fixedly connected to a side plate 12. The cell 3 is disposed in the accommodation cavity 10.

In addition, the housing 1 is of a hollow structure, and internally has an accommodation cavity 10 for accommodating the cell 3 and the electrolyte. The housing 1 may be of various shapes, such as a cuboid, hexagonal prism shape. The shape of the housing 1 may be designed based on a specific shape of the cell 3. For example, when the cell 3 is of a cuboid structure, a cuboid housing 1 may be selected. The top cover 2 is hermetically connected to the housing 1 to form a hermetical space for accommodating the cell 3 and the electrolyte. For example, the top cover 2 is connected to the housing 1 through welding.

The cell 3 is a core component of the battery cell 100 for implementing charging and discharging functions. Further, one or more cells 3 may be provided, which is not specifically limited in the present disclosure. The cell 3 includes a first electrode plate, a second electrode plate, and a separator. The first electrode plate has an opposite polarity to that of the second electrode plate. The separator is configured to separate the first electrode plate from the second electrode plate. The cell 3 operates mainly by moving metal ions between the first electrode plate and the second electrode plate. One of the first electrode plate and the second electrode plate is a positive electrode plate, and the other one of the first electrode plate and the second electrode plate is a negative electrode plate. The cell 3 may include one or more first electrode plates, and one or more second electrode plates. The number of the first electrode plates and the number of the second electrode plates may be designed based on a structure of an electrode assembly 10.

In some embodiments, the cell 3 may be a jelly roll, stacked cell, or other form of structure.

When the cell 3 is the stacked cell, the cell 3 may include a plurality of negative electrode plates that are stacked together and a plurality of laminated positive electrode plates that are stacked together. The plurality of negative electrode plates is identical with each other in composition and size (length×width×thickness), and the plurality of laminated positive electrode plates is identical with each other in composition and size (length×width×thickness). Thus, a total length L1 of the negative current collector according to the embodiments of the present disclosure is a sum of lengths of the negative current collectors of the plurality of negative electrode plates (i.e., a product of the length of the negative current collector in one negative electrode plate and the number of negative electrode plates), and a total length L2 of the positive current collector according to the embodiments of the present disclosure is a sum of lengths of the positive current collectors of the plurality of positive electrode plates (i.e., a product of the length of the positive current collector in one positive electrode plate and the number of positive electrode plates). Since the plurality of negative electrode plates has the same size (length×width×thickness), a width and a thickness of the negative current collector according to the embodiments of the present disclosure are consistent with those of the negative current collector in one of the negative electrode plates, respectively. Similarly, since the plurality of positive electrode plates all have the same size (length×width×thickness), a width and a thickness of the positive current collector according to the embodiments of the present disclosure are consistent with those of the positive current collector in one of the positive electrode plates, respectively.

When the cell 3 is a jelly roll, negative tabs may be evenly distributed on the negative electrode plate, and positive tabs may be evenly distributed on the positive electrode plate.

In some embodiments, the battery cell 100 further includes two electrode terminals mounted at the top cover 2. The two electrode terminals are configured to be electrically connect to the first electrode plate and the second electrode plate respectively to output electric energy generated by the cell 3.

In some embodiments, the cell 3 includes a main body 31 and a tab 32 connected to main body 31. The main body 31 is an electricity generating part of the cell 3, and an active material in the main body 31 is used f or electrochemical reaction with the electrolyte or the like to generate charge or discharge. The tab 32 extends from an end of the main body 31 and is configured to connect to the electrode terminals to output the electric energy generated by the main body 31.

The main body 31 includes a positive current collector, a positive active material layer, a negative current collector, a negative active material layer, and a separator. The tab 32 includes a positive tab and a negative tab.

Hereinafter, a structure of the housing 1 according to some embodiments of the present disclosure will be described with reference to the accompanying drawings.

As shown in FIG. 6 and FIG. 7a to FIG. 7k, the housing 1 includes a bottom plate 11, a side plate 12, and a transition rounded corner 13. The side plate 12 is connected to an outer edge of the bottom plate 11. The transition rounded corner 13 is transitionally connected between the bottom plate 11 and the side plate 12. An accommodation cavity 10 is defined by the transition rounded corner 13, the side plate 12, and the bottom plate 11, and is configured to accommodate the cell 3.

As shown in FIG. 7a to FIG. 7k, the bottom plate 11 has a first inner wall surface 11a facing towards the accommodation cavity 10. A part of the first inner wall surface 11a is configured to support the cell 3. The first inner wall surface 11a includes a first surface 11b and a second surface 11c. The second surface 11c is located at an outer peripheral side of the first surface 11b. The side plate 12 has a second inner wall surface 12a facing towards the accommodation cavity 10. The transition rounded corner 13 has a third inner wall surface 13a facing towards the accommodation cavity 10. The second surface 11c and the second inner wall surface 12a are connected by the third inner wall surface 13a.

At least one of the second surface 11c and the third inner wall surface 13a has an avoidance recess 1a. The avoidance recess 1a is configured to avoid an edge of the cell 3. The edge of the cell 3 corresponds to the transition rounded corner 13. The avoidance recess 1a extends in a length direction of the transition rounded corner 13. Accordingly, when the cell 3 is disposed on the bottom plate 11, the edge of the cell 3 would not interfere with the second surface 11c and the third inner wall surface 13a. Thus, the edge of the cell 3 would not be crushed by the second surface 11c and the third inner wall surface 13a, which may result in decarburization of the cell 3, reduced capacity of the cell 3, and short circuit of the cell 3, thereby ensuring the reliability and safety of the cell 3 in use. The edge of the cell 3 may be understood as two adjacent surfaces of the cell 3 and a part of the cell 3 at which the two adjacent surfaces are connected to each other.

For example, when the second surface 11c has the avoidance recess 1a, the second surface 11c is recessed relative to at least one of the first surface 11b and the third inner wall surface 13a. When the third inner wall surface 13a has the avoidance recess 1a, the third inner wall surface 13a is recessed relative to at least one of the second surface 11c and the second inner wall surface 12a. When the second surface 11c and the third inner wall surface 13a both have the avoidance recess 1a, the second surface 11c is recessed relative to the first surface 11b, and the third inner wall surface 13a is recessed relative to the second inner wall surface 12a.

Therefore, when the housing 1 is applied in the battery 200, the cell 3 may be directly disposed on the bottom plate 11, which can ensure that the edge of the cell 3 will not be crushed. In the related art, a bottom support plate is disposed in the accommodation cavity to raise the cell through the bottom support plate by a predetermined height, thereby avoiding the edge of the cell from being crushed. In the present disclosure, it is not necessary to provide a separate bottom support plate, which can save the assembly process of the bottom support plate and lower the cost of mounting (e.g., the cost of hot-melting the bottom support plate to a bottom of an insulation film wrapped around the cell. In the related art, the cell is accommodated in a bag-shaped insulation film to ensure the cell is insulated from the housing, and the base support plate is fixed to a bottom surface of the bag-shaped insulation film through hot melting).

It should be understood that the first surface 11b may be directly connected to the second surface 11c. In some other embodiments, the first surface 11b and the second surface 11c may be spaced apart from each other, and The first surface 11b and the second surface 11c may be indirectly connected by other parts of the first inner wall surface 11a.

For example, the housing 1 includes a plurality of side plates 12, and the plurality of side plates 12 are arranged around bottom plate 11. A transition rounded corner 13 is formed between each side plate 12 and the bottom plate 11. Therefore, the avoidance recess 1a is formed on at least one of the second surface 11c corresponding to at least one of the plurality of side plates 12 and the corresponding third inner wall surface 13a. As shown in FIG. 4, four side plates 12 are provided, and the four side plates 12 are respectively a front side plate, a rear side plate, a left side plate, and a right side plate. The avoidance recess 1a is formed on at least one of the second surface 11c corresponding to the front side plate and the third inner wall surface 13a corresponding to the front side plate, and/or the avoidance recess 1a is formed on at least one of the second surface 11c corresponding to the rear side plate and the third inner wall surface 13a corresponding to the rear side plate, and/or the avoidance recess 1a is formed on at least one of the second surface 11c corresponding to the left side plate and the third inner wall surface 13a corresponding to the left side plate, and/or the avoidance recess 1a is formed on at least one of the second surface 11c corresponding to the right side plate and the third inner wall surface 13a corresponding to the right side plate.

In the description of the present disclosure, it should be noted that the orientation or position relationship indicated by the terms "front," "rear," "left," "right," "top," "bottom," and the like should be construed to refer to the orientation or the position as shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure. For example, for the front side plate, when the battery 200 is in use, the front side plate may be located at a front side, a rear side, an upper side, a lower side, a left side, or a right side of the battery 200.

In the case 1 of the battery cell 100 according to the embodiments of the present disclosure, a distance between the cell 3 and an inner wall surface of the housing 1 can be increased by forming the avoidance recess 1a on at least one of the second surface 11b of a bottom plate 11 and the third inner wall surface 13a of the transition rounded corner 13. In this way, there is a suitable spacing between an edge of the cell 3 and the inner wall surface of the housing 1. Therefore, the edge of the cell 3 can be prevented from being crushed by the transition rounded corner 13, which may result in decarburization of the cell 3, reduced capacity of the cell 3, and short-circuit of the cell 3. Therefore, in the present disclosure, it is not necessary to provide a separate bottom support plate on the housing 1 to raise the cell 3 by a predetermined height, thus the assembling and fixing processes of the bottom support plate can be saved, reducing the cost of mounting the bottom support plate such as cost of hot melt for fixing the bottom support plate on the housing 1. Therefore, the number of components of the battery cell 100 can be reduced, and thus a structure of the battery cell 100 is simplified, thereby improving the assembly efficiency and production efficiency of the battery cell 100.

It should be understood that a depth of the avoidance recess 1a and a cross sectional shape of the avoidance recess 1a may be designed as desired. For example, as shown in FIG. 7a to FIG. 7k, a wall surface of the avoidance recess 1a may be a flat surface or a curved surface.

In some embodiments, as shown in FIG. 7a to FIG. 7d, the housing 1 has a first reference arc-shaped plane R1 and a reference flat plane R2. The first reference arc-shaped plane R1 is tangent to the second inner wall surface 12a and the reference flat plane R2, respectively. The third inner wall surface 13a is recessed relative to the first reference arc-shaped plane R1 to allow the avoidance recess 1a to be formed on the third inner wall surface 13a. In this case, the third inner wall surface 13a is also recessed relative to the second inner wall surface 12a. Therefore, while ensuring that the edge of the cell 3 does not interfere with the bottom plate 11 and the transition rounded corner 13, the avoidance recess 1a has a simple structure and is convenient to be processed.

In some embodiments, as shown in FIG. 7a, the first surface 11b and the second surface 11c are both coplanar with the reference flat plane R2. That is, the first surface 11b and the second surface 11c are both located on the reference flat plane R2. In this case, there is no need to form the avoidance recess 1a on the second surface 11c, and an avoidance of the edge of the cell 3 can be realized only by the avoidance recess 1a on the third inner wall surface 13a, which is convenient to reduce processing steps of the housing 1 and lower the cost. Meanwhile, the cell 3 may be directly disposed on the first surface 11b and the second surface 11c, which is beneficial to ensuring the utilization rate of the accommodation cavity 10 and the energy density of the battery 200.

In other embodiments of the present disclosure, as shown in FIG. 7b to FIG. 7d, at least one of the first surface 11b and the second surface 11c protrudes from the reference flat plane R2 to form a support protrusion 111. Therefore, a part of the bottom plate 11 protruding from the reference flat plane R2 may be formed as the support protrusion 111, and the support protrusion 111 is a part of the bottom plate 11; or the support protrusion 111 is integrally formed on the main body of the bottom plate 11, and the cell 3 may be raised by the support protrusion 111 by a predetermined height to further keep the edge of the cell 3 away from the transition rounded corner 13. Therefore, the cell 3 can be protected. In this case, the cell 3 may be directly disposed on the support protrusion 111, or the cell 3 may be directly disposed one the one of the first surface 11b and the second surface 11c. Therefore, the first surface 11b and the second surface 11c are flexibly arranged, allowing the housing 1 to meet the differentiated requirements of different battery cells 100.

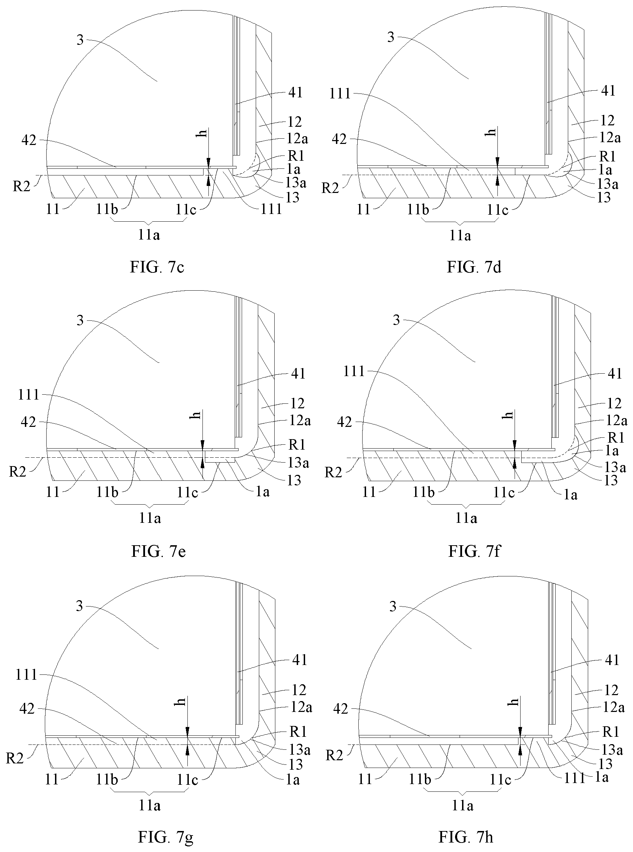

For example, in an example shown in FIG. 7b, the third inner wall surface 13a is recessed relative to the first reference arc-shaped plane R1. Both the first surface 11b and the second surface 11c protrude from the reference flat plane R2. Therefore, a part of the bottom plate 11 that corresponds to the first surface 11b and the second surface 11c and protrudes from the reference flat plane R2 is formed as the support protrusion 111. In this case, on the flat plane on which the bottom plate 11 is located, the support protrusion 111 is in contact with the third inner wall surface 13a to be directly connected to the third inner wall surface 13a. Further, in an example shown in FIG. 7c, the third inner wall surface 13a is recessed relative to the first reference arc-shaped plane R1. The first surface 11b is coplanar with the reference flat plane R2. The second surface 11c protrudes from the reference flat plane R2. Therefore, a part of the bottom plate 11 that corresponds to the second surface 11c and protrudes from the reference flat plane R2 is formed as the support protrusion 111. In this case, on the flat plane on which the bottom plate 11 is located, the support protrusion 111 is in contact with the third inner wall surface 13a to be directly connected to the third inner wall surface 13a. Further, in an example shown in FIG. 7d, the third inner wall surface 13a is recessed relative to the first reference arc-shaped plane R1. The second surface 11c is coplanar with the reference flat plane R2. The first surface 11b protrudes from the reference flat plane R2. A part of the bottom plate 11 that corresponds to the first surface 11b and protrudes from the reference flat plane R2 is formed as the support protrusion 111. In this case, the support protrusion 111 is spaced apart from the third inner wall surface 13a on the flat plane on which the bottom plate 11 is located.

In some embodiments, as shown in FIG. 7e and FIG. 7f, the housing 1 has a first reference arc-shaped plane R1 and a reference flat plane R2. The first reference arc-shaped plane R1 is tangent to the second inner wall surface 12a and the reference flat plane R2, respectively. The second surface 11c is recessed relative to the reference flat plane R2 to allow the avoidance recess 1a to be formed on the second surface 11c. The first surface 11b protrudes from the reference flat plane R2 to form the support protrusion 111. Therefore, the support protrusion 111 can raise the cell 3 by a predetermined height to further keep the edge of the cell 3 away from the transition rounded corner 13 and the second surface 11c. Therefore, an interference of a connection between the second surface 11c and the third inner wall surface 13a with the edge of the cell 3 can be avoided to provide a protection to the cell 3. In this case, the cell 3 can be directly disposed on the first surface 11b, and on the flat on which the bottom plate 11 is located, the support protrusion 111 is in contact with the third inner wall surface 13a to be directly connected to the third inner wall surface 13a.

It should be understood that when the second surface 11c is recessed relative to the reference flat plane R2 and the first surface 11b protrudes from the reference flat plane R2, the third inner wall surface 13a may be arranged in the following manners. As shown in FIG. 7e, the third inner wall surface 13a may be tangent to the second inner wall surface 12a and the reference flat plane R2 respectively, and the third inner wall surface 13a may be formed into an arc-shaped surface; or as shown in FIG. 7f, the third inner wall surface 13a is recessed relative to the first reference arc-shaped plane R1 to allow the avoidance recess 1a to be formed on the third inner wall surface 13a. In this case, a depth of the avoidance recess 1a of the second surface 11c and a depth of the avoidance recess 1a of the third inner wall surface 13a may be equal to or different from each other.

In some embodiments, as shown in FIG. 7g to FIG. 7k, the housing 1 has a reference flat plane R2. An arc-shaped plane on which third inner wall surface 13a is located (e.g., the first reference arc-shaped plane R1) is tangent to the second inner wall surface 12a and the reference flat plane R2, respectively. At least one of the first surface 11b and the second surface 11c protrudes from the reference flat plane R2 to form a support protrusion 111. The support protrusion 111 can raise the cell 3 by a predetermined height to further keep the edge of the cell 3 away from the transition rounded corner 13 and the second surface 11c. Therefore, an interference of a connection between the second surface 11c and the third inner wall surface 13a with the edge of the cell 3 can be avoided to provide protection to the cell 3. In this case, the cell 3 can be directly disposed on at least one of the first surface 11b and the second surface 11c.

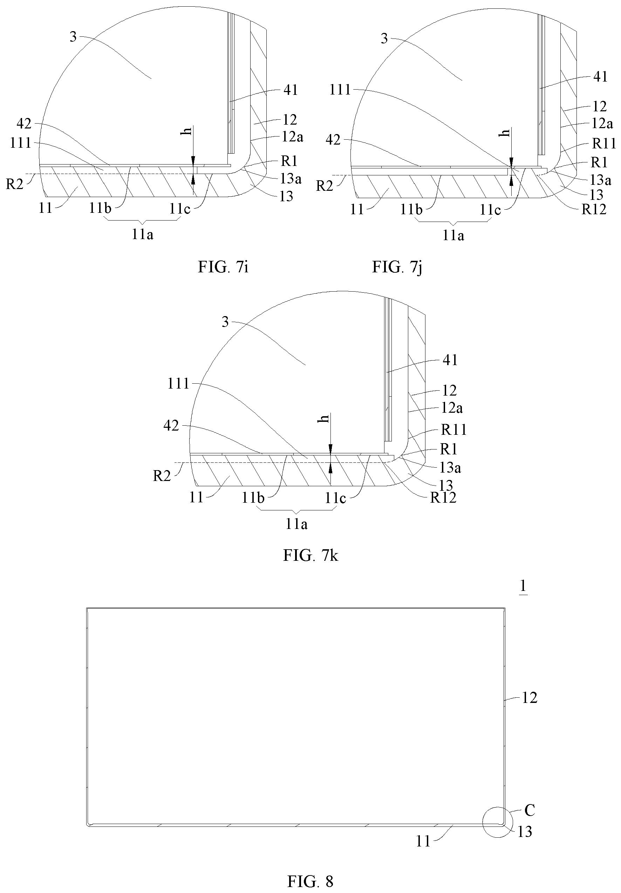

For example, in an example shown in FIG. 7g, the third inner wall surface 13a is tangent to the second inner wall surface 12a and the reference flat plane R2, respectively, and the third inner wall surface 13a is formed into an arc-shaped surface. Both the first surface 11b and the second surface 11c protrude from the reference flat plane R2. As a result, a part of the bottom plate 11 that corresponds to the first surface 11b and the second surface 11c and protrudes from the reference flat plane R2 is formed as the support protrusion 111. In this case, the third inner wall surface 13a is recessed relative to the second surface 11c to allow the avoidance recess 1a to be formed on the third inner wall surface 13a. Further, on the flat plane on which the bottom plate 11 is located, the support protrusion 111 is in contact with the third inner wall surface 13a to be directly connected to the third inner wall surface 13a. Further, in an example shown in FIG. 7h, the third inner wall surface 13a is tangent to the second inner wall surface 12a and the reference flat plane R2, respectively, and the third inner wall surface 13a is formed into an arc-shaped surface. The first surface 11b is coplanar with the reference flat plane R2. The second surface 11c protrudes from the reference flat plane R2. Therefore, a part of the bottom plate 11 that corresponds to the second surface 11c and protrudes from the reference flat plane R2 is formed as the support protrusion 111. In this case, the third inner wall surface 13a is recessed relative to the second surface 11c to allow the avoidance recess 1a to be formed on the third inner wall surface 13a. Further, on the flat plane on which the bottom plate 11 is located, the support protrusion 111 is in contact the third inner wall surface 13a to be directly connected to the third inner wall surface 13a. Further, in an example shown in FIG. 7i, the third inner wall surface 13a is tangent to the second inner wall surface 12a and the reference flat plane R2, respectively, and the third inner wall surface 13a is formed into an arc-shaped plane. The second surface 11c is coplanar with the reference flat plane R2. The first surface 11b protrudes from the reference flat plane R2. Therefore, a part of the bottom plate 11 that corresponds to the first surface 11b and protrudes from the reference flat plane R2 is formed as the support protrusion 111. In this case, the second surface 11c is recessed relative to the first surface 11b to allow the avoidance recess 1a to be formed on the second surface 11c. Further, on the flat plane on which the bottom plate 11 is located, the support protrusion 111 is spaced apart from the third inner wall surface 13a.

In some embodiments, as shown in FIG. 7j and FIG. 7k, the arc-shaped plane on which the third inner wall surface 13a is located has a first end R11 and a second end R12 in a circumferential direction, respectively. The first end R11 is connected to the second inner wall surface 12a. The second end R12 is located away from the second inner wall surface 12a, and is connected to reference flat plane R2. The second surface 11c protrudes from the reference flat plane R2. The support protrusion 111 extends to a position between the first end R11 and the second end R12. In this case, on the flat plane on which the bottom plate 11 is located, the support protrusion 111 is in contact with the third inner wall surface 13a to be directly connected to the third inner wall surface 13a, and the support protrusion 111 is connected between circumferential two ends of the first reference arc-shaped plane R1, which can also raise the cell 3 by a predetermined height to allow the edge of the cell 3 to avoid the housing 1. As a result, the cell 3 can be directly disposed on the second surface 11c while ensuring the structural strength of the bottom plate 11.

It should be understood that when the support protrusion 111 extends to a position between the first end R11 and the second end R12, the first surface 11b is flush with the reference flat plane R2 (as shown in FIG. 7j, or the first surface 11b protrudes from the reference flat plane R2 to be flush with the second surface 11c (as shown in FIG. 7k) or not to be flush with the second surface 11c.

It should be noted that, in the description of the present disclosure, the first surface 11b is coplanar with the reference flat plane R2, which may be understood as the first surface 11b being formed as a part of the reference flat plane R2. The second surface 11c is coplanar with the reference flat plane R2, which may be understood as the second surface 11c being formed as a part of the reference flat plane R2. Therefore, the terms "first reference arc-shaped plane R1", "reference flat plane R2", and "second reference arc-shaped plane 3" described later in this disclosure are not actual surfaces of the housing 1, but are only used as auxiliary reference planes to define the actual surfaces of the housing 1 and the cell 3.

In some embodiments, the support protrusion 111 has a projected area s1 in a thickness direction of the bottom plate 11, and the bottom plate 11 has a projected area s in the thickness direction of the bottom plate 11, where 0.1≤s1/s≤0.9. Therefore, a surface area of the support protrusion 111 for supporting the cell 3 may be flexibly set as desired, which facilitates the support protrusion 111 to be designed variously while ensuring a reliable arrangement of the cell 3. In addition, there is a proper abutment area between the support protrusion 111 and the bottom surface of the cell 3 to ensure the wetting effect of the electrolyte on the bottom of the cell 3.

In another exemplary embodiment of the present disclosure, s1/s may be 0.1, 0.2, 0.3, 0.4, 0.5, 0.6, 0.7, 0.8, 0.9, or the like.

In some embodiments, as shown in FIG. 7a to FIG. 7k, the support protrusion 111 protrudes from the reference flat plane R2 by a height h, where 0.1 mm≤h≤2.0 mm. Therefore, it can be ensured that the cell 3 can be raised through the support protrusion 111 by a suitable height, which ensures that there is a predetermined spacing between the edge of the cell 3 and the inner wall of the housing 1, allowing the edge of the cell 3 not to interfere with the inner wall of the housing 1.

For example, h may be greater than or equal to a radius of a first reference arc. In some other embodiments, h may be smaller than the radius of the first reference arc.

In another exemplary embodiment of the present disclosure, h may be 0.1 mm, 0.5 mm, 0.8 mm, 1 mm, 1.3 mm, 1.5 mm, 1.8 mm, or 2 mm.

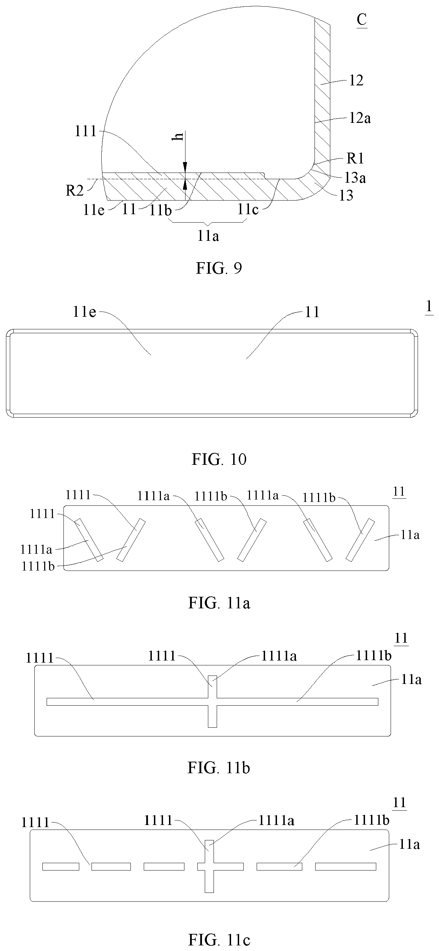

In some embodiments, as shown in FIG. 11a to FIG. 11g, the support protrusion 111 includes at least one rib 1111. Each of the at least one rib 1111 is of an elongated shape extending along a straight line or a curved line, allowing the rib 1111 to be designed flexibly, and facilitating an adjustment of the support area of the support protrusion 111 by adjusting at least one of a top surface area of the rib 1111 and the number of the ribs 1111. Therefore, the cell 3 can be ensured to be stably arranged.

It should be understood that a length, a width, and a cross sectional shape of the rib 1111 may be specifically set as desired.

In some embodiments, as shown in FIG. 11a to FIG. 11c, a plurality of ribs 1111 are provided. The plurality of ribs 1111 include at least one first rib 1111a and at least one second rib 1111b. Each of the plurality of first ribs 111a is of an elongated shape extending in a first direction. Each of the second ribs 111b is of an elongated shape extending in a second direction. The first direction intersects the first direction, i.e., the first direction and the second direction are not parallel with each other. Therefore, a stable support to the cell 3 can be ensured by the plurality of ribs 1111.

In other embodiments of the present disclosure, extending directions of the plurality of ribs 1111 may be the same to each other to allow the plurality of ribs 1111 to be arranged in parallel.

In some embodiments, as shown in FIG. 11b and FIG. 11c, the first rib 1111a intersects with the second rib 1111b to ensure support stability from the support protrusion 111. In another exemplary embodiment of the present disclosure, in examples shown in FIG. 11b and FIG. 11c, the first rib 1111a intersects perpendicularly with the second rib 1111b. In this case, the number of the first ribs 1111a may be equal or unequal to the number of the second ribs 1111b. In some other embodiments, an angle formed between the first rib 1111a and the second rib 1111b may be an acute angle.

In other embodiments of the present disclosure, as shown in FIG. 11a, the first rib 1111a and the second rib 1111b may be spaced apart from each other.

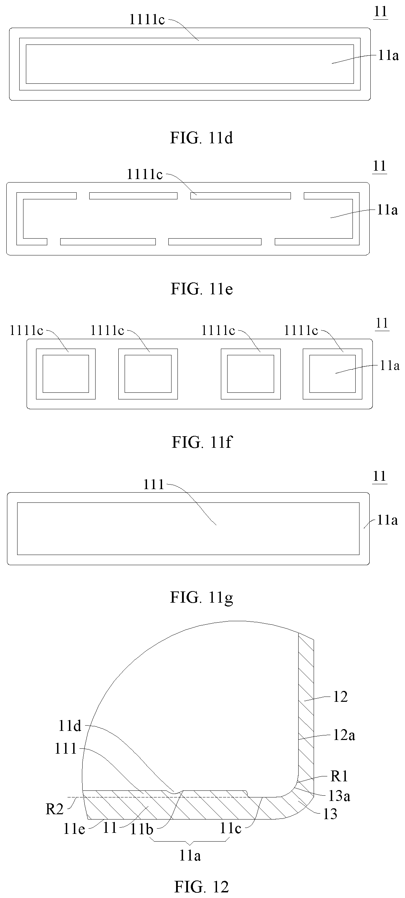

In some embodiments, as shown in FIG. 11d, the rib 1111 includes a third rib 1111c. The third rib 1111c is of a ring shape extending in a circumferential direction of the bottom plate 11 to ensure stable support to the cell 3 by the third rib 1111c.

It should be noted that the "ring shape" described in the present disclosure should be understood in a broad sense, and is not limited to the "circular ring shape". For example, the "ring shape" may also be a "polygonal ring", or the like. Moreover, the "ring shape" defines an extension trend of the third rib 1111c, and the third rib 111c may extend continuously or intermittently. In addition, the "ring shape" further includes of a ring shape with an opening 10a (e.g., a C-shaped structure) and a closed ring shape.

It can be understood that the rib 1111 may include one or more third ribs 1111c. When the rib 1111 includes a plurality of third ribs 1111c, an arrangement pattern of the plurality of third ribs 1111c may be designed as desired.

In some embodiments, the rib 1111 may include a plurality of third ribs 1111c, and the plurality of third ribs 1111c are coaxially arranged. That is, central axes of a plurality of ring shape structures corresponding to the plurality of third ribs 1111c are coincident with each other. In this case, one of two adjacent third ribs 1111c is arranged around the other one of the two third ribs 111c to further ensure stable support to the cell 3.

The plurality of third ribs 1111c may further be arranged in such a manner that the entire ring-shaped structures corresponding to the plurality of third ribs 1111c are sequentially arranged in a predetermined direction, as shown in FIG. 11f.

In some embodiments, the plurality of ribs 1111 include a first rib 1111a, a second rib 111b, a third rib 1111c.

In some embodiments, the rib 1111 extends continuously (as shown in FIG. 11a, FIG. 11b, and FIG. 11d) or intermittently (as shown in FIG. 11c and FIG. 11e) to further flexibly adjust the support area of the support protrusion 111.

In some embodiments, the support protrusion 111 is a solid protrusion and is formed into a circular structure, or an elliptical structure, or a polygonal structure (as shown in FIG. 11g) to ensure stable support to the cell 3 by the support protrusion 111.

In some embodiments, as shown in FIG. 7a to FIG. 7k, at least one of the first surface 11b and the second surface 11c is configured to abut with the cell 3. At least one of the first surface 11b and the second surface 11c is adapted to be in direct contact with the cell 3 or indirectly abut with the cell 3 by other components such as an insulation film 4 of the surface of the cell 3.

In some embodiments, as shown in FIG. 12, at least one of the first surface 11b and the second surface 11c has an accommodation groove 11d configured to accommodate an electrolyte. When the cell 3 is disposed at an upper side of the one of the first surface 11b and the second surface 11c, at least a wall surface of the accommodation groove 11d is spaced apart from the cell 3. The electrolyte is accommodated in the accommodation groove 11d, which allows the electrolyte in the accommodation groove 11d to wet the bottom of cell 3 to ensure the wetting effect on the cell 3.

It should be understood that a depth, shape, number and arrangement pattern of the accommodation groove 11d may be designed as desired to ensure the wetting effect of the electrolyte on the bottom of the cell 3.

In some embodiments, as shown in FIG. 12, at least one of the first surface 11b and the second surface 11c is configured to abut with the cell 3, and at least one of the first surface 11b and the second surface 11c has the accommodation groove 11d configured to accommodate the electrolyte. At least one of the first surface 11b and the second surface 11c is configured to be in direct contact with the cell 3 or indirectly abut with the cell 3 through other components, such as the insulation film 4 of the surface of the cell 3. Therefore, the at least one of the first surface 11b and the second surface 11c can exert a predetermined support force on the cell 3 to ensure that the cell 3 is stably arranged. In addition, the wall surface of the accommodation groove 11d is spaced apart from the cell 3 when the cell 3 is disposed at the at least one of the first surface 11b and the second surface 11c. The electrolyte is accommodated in the accommodation groove 11d, allowing the electrolyte in the accommodation groove 11d to wet the bottom of the cell 3 to ensure the wetting effect on the cell 3.

For example, in the examples shown in FIG. 4 and FIG. 12, the insulation film 4 includes a first insulation portion 41 and a second insulation portion 42. The second insulation portion 42 is abutted at a position between the cell 3 and the bottom plate 11, and the first insulation portion 41 is disposed between the cell 3 and the side plate 12. The insulation film 4 may be a Mylar film.

It should be understood that when one of the first surface 11b and the second surface 11c is not in contact with the cell 3 (FIG. 7c to FIG. 7f, FIG. 7h to FIG. 7j), one of the first surface 11b and the second surface 11c is recessed relative to the other one of the first surface 11b and the second surface 11c. Therefore, there is a gap between the one of the first surface 11b and the second surface 11c and the cell 3, and the gap is also used for containing the electrolyte to ensure the wetting effect on the bottom of the cell 3.

In some embodiments, as shown in FIG. 6 to FIG. 9 and FIG. 12, the bottom plate 11 has an outer wall surface 11e facing away from the accommodation cavity 10, and the outer wall surface 11e is formed into a flat surface. As a result, the processing of the outer wall surface 11e can be simplified, which facilitates the arrangement of the battery 200.

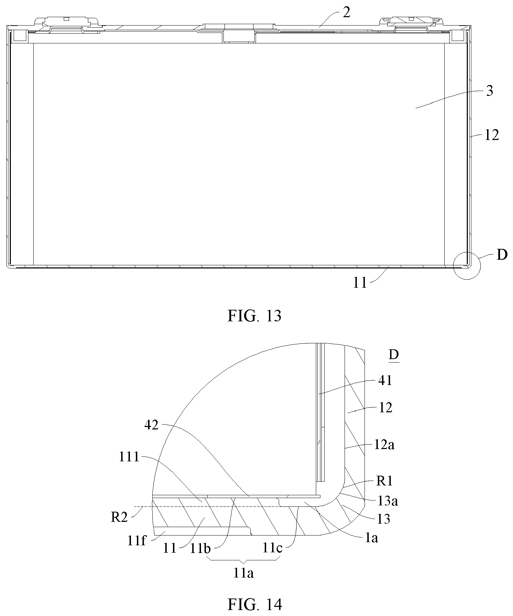

In some embodiments, as shown in FIG. 13 to FIG. 18, the housing 1 has a first reference arc-shaped plane R1 and a reference flat plane R2. The first reference arc-shaped plane R1 is tangent to the second inner wall surface 12a and the reference flat plane R2, respectively. The first surface 11b protrudes from the reference flat plane R2 to form a support protrusion 111. The bottom plate 11 has an outer wall surface 11e facing away from the accommodation cavity 10. The outer wall surface 11e has a first recess 11f opposite to the support protrusion 111. Therefore, a material of a part of the bottom plate 11 corresponding to the support protrusion 111 may be at least partially derived from a material of a part of the bottom plate corresponding to the first recess 11f, thereby improving a material utilization rate of the bottom plate 11.

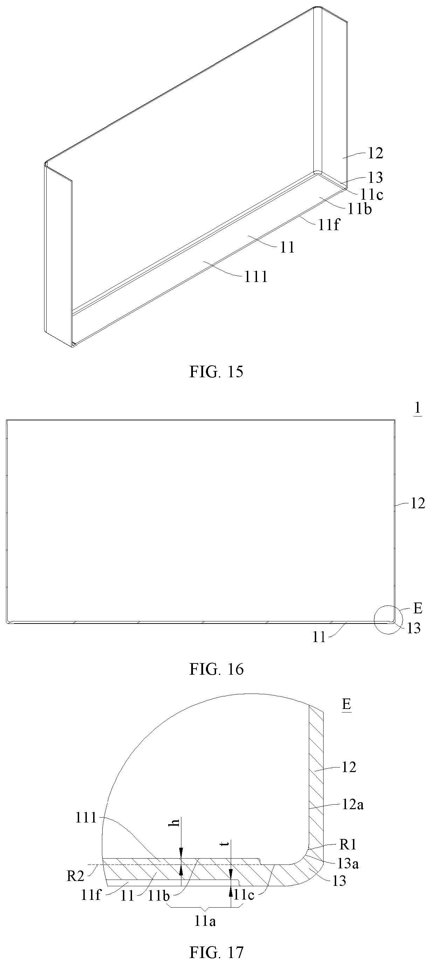

In some embodiments, as shown in FIG. 14 and FIG. 17, the first recess 11f has a depth t, where 0<t≤2 mm, and thus the bottom plate 11 still has a proper thickness after forming the first recess 11f; and/or, the support protrusion 111 protrudes from the reference flat plane R2 by a height h equal to the depth t of the first recess 11f, which can also ensure that the bottom plate 11 still has a proper thickness after forming the first recess 11f.

In another exemplary embodiment of the present disclosure, the depth of the first recess 11f may be 0.1 mm, 0.8 mm, 1 mm, 1.5 mm, 1.7 mm, 2 mm, or the like.

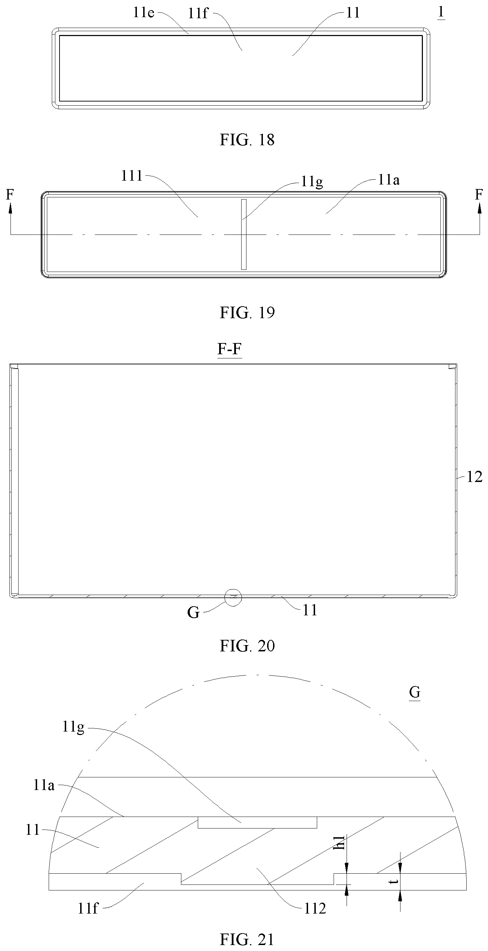

In some embodiments, as shown in FIG. 20 to FIG. 23, the bottom plate 11 has an outer wall surface 11e facing away from the accommodation cavity 10. At least one reinforcing rib 112 is formed on the outer wall surface 11e to enhance the structural strength of the bottom plate 11 and reduce the deformation of the bottom plate 11, thereby reducing the deformation of the bottom of the housing 1. Therefore, a safety issue caused by ungluing of the interface between the bottom of housing 1 and the module pack due to too large deformation of the bottom of housing 1 can be avoided, and thus the safety of the battery 200 can be ensured. The at least one reinforcing rib 112 may include one or more reinforcing ribs. When the at least one reinforcing rib 112 includes a plurality of reinforcing ribs 112, the arrangement pattern of the plurality of reinforcing ribs 112 may be designed as desired. For example, the plurality of reinforcing ribs 112 are arranged at intervals, or at least two of the plurality of reinforcing ribs 112 intersect with each other.

It should be understood that, when the outer wall surface 11e is formed as a flat surface, the reinforcing rib 112 may be disposed on the flat surface, and the reinforcing rib 112 protrudes from the flat surface. When the first recess 11f is formed on the outer wall surface 11e, as shown in FIG. 21, the reinforcing rib 112 may be disposed on a side wall surface of the first recess 11f facing the accommodation city 10 (i.e., a bottom wall of the first recess 11f), and the reinforcing rib 112 protrudes from the side wall surface of the first recess 11f. Therefore, the occupied space of the housing 1 can be saved, improving a space utilization rate of the battery 200. In some other embodiments, the reinforcing rib 112 may also be disposed at an outer side of the first recess 11f.

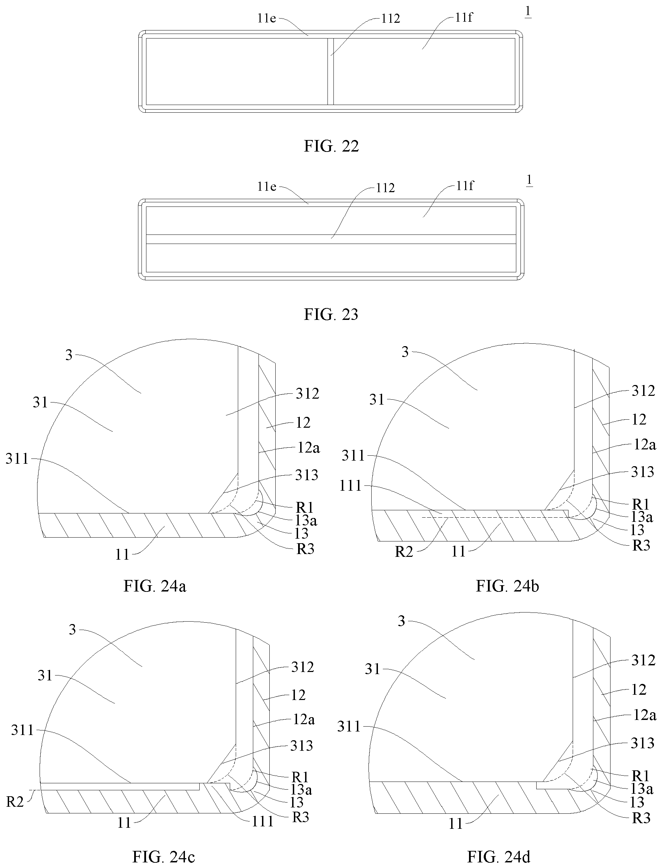

In some embodiments, as shown in FIG. 23, the reinforcing rib 112 is of an elongated shape, which facilitates the arrangement of the reinforcing rib 112.

It should be understood that when the first recess 11f is formed on the outer wall surface 11e, a length of the reinforcing rib 112 may be smaller than or equal to a length of the first recess 11f.

In some other embodiments, an extending direction of the reinforcing rib 112 intersects a length direction of the bottom plate 11 by a non-zero angle. That is, the extending direction of the reinforcing rib 112 intersects the length direction of the bottom plate 11 by an acute angle or a right angle (e.g., the extending direction of the reinforcing rib 112 is a width direction of the bottom plate 11). For example, as shown in FIG. 22, the reinforcing rib 112 extends in the width direction of the bottom plate 11. In this case, when the first recess 11f is formed on the outer wall surface 11e, the length of the reinforcing rib 112 may be smaller than or equal to a width of the first recess 11f.

It should be noted that the reinforcing rib 112 may extend along a straight line or a curved line.

In some embodiments, as shown in FIG. 21, when a height h1 of the reinforcing rib 112 is smaller than or equal to the depth t of the first recess 11f, the reinforcing rib 112 does not protrude from the outer wall surface 11e, which can save the occupied space of the housing 1.

In some embodiments, as shown in FIG. 21, the first inner wall surface 11a further has a second recess 11g, and the second recess 11g is opposite to the reinforcing rib 112 in a thickness direction of the bottom plate 11. Therefore, a material of a part of the bottom plate 11 corresponding to the reinforcing rib 112 may be at least partially derived from a material of a part of the bottom plate 11 corresponding to the second recess 11g, thereby improving the material utilization rate of the bottom plate 11. In some other embodiments, the first inner wall surface 11a may have no second recess 11g.

In some embodiments, as shown in FIG. 5 to FIG. 23, the bottom plate 11 is an integrated stamping part, which facilitates the processing of the bottom plate 11.

For example, the first inner wall surface 11a is provided with the support protrusion 111. The outer wall surface 11e of the bottom plate 11 has a first recess 11f directly opposite to the support protrusion 111. In this case, the first recess 11f and the support protrusion 111 may be simultaneously formed through a stamping process. That is, a stamping is carried out by a stamping device at a position on which the first recess 11f is formed to simultaneously form the first recess 11f and the support protrusion 111.

For another example, the second recess 11g is formed on the first inner wall surface 11a, and the outer wall surface 11e is provided with the reinforcing rib 112 opposite to the second recess 11g. In this case, the second recess 11g and the reinforcing rib 112 may be simultaneously formed through a stamping process. That is, a stamping is carried out by a stamping device at a position on which the second recess 11g is formed to simultaneously form the second recess 11g and the support rib 112.

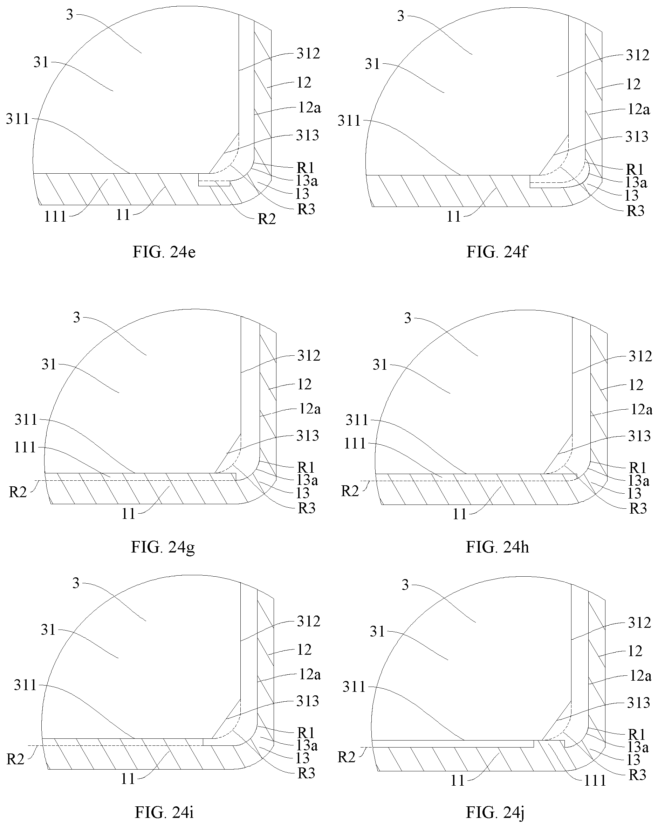

In some embodiments, as shown in FIG. 24a to FIG. 24j, the battery cell 100 further includes a cell 3. The cell 3 is accommodated in the accommodation cavity 10 of the housing 1. The cell 3 has a bottom wall 311, a side wall 312, and a connection wall 313. The bottom wall 311 and the side wall 312 are connected to each other by the connection wall 313. The connection wall 313 extends in a length direction of the transition rounded corner 13. The cell 3 further has a second reference arc-shaped plane R3. The second reference arc-shaped plane R3 is tangent to the bottom wall 311 and the side wall 312, respectively. The connection wall 313 is radially located inside of the second reference arc-shaped plane R3. By double cooperation of the connection wall 313 and the avoidance recess 1a on the housing 1, the distance between the edge of the cell 3 and the inner wall surface of the housing 1 is further increased. As a result, the edge of the cell 3 can be ensured not to be crushed by the inner wall surface of the housing 1, which is conducive to further improving the reliability and safety of the cell 3.

It should be understood that a size of the connection wall 313 may be adaptively adjusted based on a radius of the second reference arc-shaped plane R3. For example, in examples shown in FIG. 24a to FIG. 24j, the connection wall 313 has a third end connected to the bottom wall 311 and a fourth end connected to the side wall 312. The second reference arc-shaped plane R3 is tangent to the bottom wall 311 at a first predetermined position, and the second reference arc-shaped plane R3 is tangent to the side wall 312 at a second predetermined position. The third end is located at the first predetermined position, or located at a side of the first predetermined position away from the second reference arc-shaped plane R3. The fourth end is located at the second predetermined position, or located at a side of the second predetermined position away from the second reference arc-shaped plane R3.

In another exemplary embodiment of the present disclosure, the cell 3 with the above connection wall 313 may be a stacked cell, and the present disclosure is not limited in this regard.

Although embodiments of the present disclosure have been illustrated and described, it should be understood by those of ordinary skill in the art that various changes, modifications, replacements, and variations may be made to these embodiments without departing from the principles and spirit of the present disclosure. The scope of the present disclosure shall be defined by the claims as appended and their equivalents.

## Claims

1. A housing for accommodating a cell of a battery cell, the housing comprising:
a bottom plate;
a side plate connected to an outer edge of the bottom plate; and
a transition rounded corner transitionally connected between the bottom plate and the side plate, wherein:
an accommodation cavity is defined by the transition rounded corner, the side plate, and the bottom plate, the accommodation cavity being configured to accommodate the cell;
the bottom plate has a first inner wall surface facing towards the accommodation cavity, the first inner wall surface comprising a first surface and a second surface, the second surface being located at an outer peripheral side of the first surface,
the side plate has a second inner wall surface facing towards the accommodation cavity;
the transition rounded corner has a third inner wall surface facing towards the accommodation cavity, the second surface and the second inner wall surface being connected by the third inner wall surface; and
at least one of the second surface and the third inner wall surface has an avoidance recess configured to avoid an edge of the cell.

2. The housing according to claim 1, wherein:
the housing has a first reference arc-shaped plane and a reference flat plane, the first reference arc-shaped plane being tangent to the second inner wall surface and the reference flat plane, respectively; and
the third inner wall surface is recessed relative to the first reference arc-shaped plane to allow the avoidance recess to be formed on the third inner wall surface.

3. The housing according to claim 2, wherein:
the first surface and the second surface are both coplanar with the reference flat plane; or
at least one of the first surface and the second surface protrudes from the reference flat plane to form a support protrusion.

4. The housing according to any one of claims 1 to 3, wherein:
the housing has a first reference arc-shaped plane and a reference flat plane, the first reference arc-shaped plane being tangent to the second inner wall surface and the reference flat plane, respectively;
the second surface is recessed relative to the reference flat plane to allow the avoidance recess to be formed on the second surface; and
the first surface protrudes from the reference flat plane to form a support protrusion.

5. The housing according to claim 1, wherein:
the housing has a reference flat plane;
an arc-shaped plane on which the third inner wall surface is located is tangent to the second inner wall surface and the reference flat plane, respectively; and
at least one of the first surface and the second surface protrudes from the reference flat plane to form a support protrusion.

6. The housing according to claim 5, wherein:
the arc-shaped plane on which the third inner wall surface is located has a first end and a second end in a circumferential direction, respectively, the first end being connected to the second inner wall surface, and the second end being connected to the reference flat plane;
the second surface protrudes from the reference flat plane; and
the support protrusion extends to a position between the first end and the second end.

7. The housing according to any one of claims 3 to 6, wherein:
the support protrusion has a projected area s1 on a plane perpendicular to a thickness direction of the bottom plate; and
the bottom plate has a projected area s on the plane perpendicular to the thickness direction of the bottom plate, where 0.1≤s1/s≤0.9.

8. The housing according to any one of claims 3 to 7, wherein at least one of the first surface and the second surface protrudes from the reference flat plane to form a support protrusion, the support protrusion protruding from the reference flat plane by a height h, where 0.1 mm≤h≤2.0 mm.

9. The housing according to any one of claims 3 to 8, wherein the support protrusion comprises at least one rib, each of the at least one rib being of an elongated shape extending along a straight line or a curved line.

10. The housing according to claim 9, wherein the at least one rib comprises a plurality of ribs, the plurality of ribs comprising:
at least one first rib, each of the at least one first rib being of an elongated shape extending in a first direction; and
at least one second rib, each of the at least one second rib being of an elongated shape extending in a second direction intersecting the first direction.

11. The housing according to claim 9 or 10, wherein the at least one rib comprises at least one third rib, each of the third rib being of a ring shape extending in a circumferential direction of the bottom plate.

12. The housing according to claim 11, wherein the at least one third rib comprises a plurality of third ribs coaxially arranged.

13. The housing according to any one of claims 9 to 12, wherein each of the at least one rib extends continuously or intermittently.

14. The housing according to any one of claims 3 to 8, wherein the support protrusion is a solid protrusion and is formed into a circular structure, an elliptical structure, or a polygonal structure.

15. The housing according to any one of claims 1 to 14, wherein:
at least one of the first surface and the second surface is configured to abut with a cell; and/or
at least one of the first surface and the second surface has an accommodation groove configured to accommodate an electrolyte.

16. The housing according to any one of claims 1 to 15, wherein the bottom plate has an outer wall surface facing away from the accommodation cavity, the outer wall surface being formed into a flat surface.

17. The housing according to any one of claims 1 to 15, wherein:
the housing has a first reference arc-shaped plane and a reference flat plane, the first reference arc-shaped plane being tangent to the second inner wall surface and the reference flat plane, respectively;
the first surface protrudes from the reference flat plane to form a support protrusion; and
the bottom plate has an outer wall surface facing away from the accommodation cavity, the outer wall surface having a first recess opposite to the support protrusion.

18. The housing according to claim 17, wherein:
the first recess has a depth t, where 0<t≤2 mm; and/or
the support protrusion protrudes from the reference flat plane by a height equal to the depth of the first recess.

19. The housing according to any one of claims 1 to 18, wherein the bottom plate has an outer wall surface facing away from the accommodation cavity, at least one reinforcing rib being formed at the outer wall surface.

20. The housing according to claim 19, wherein each of the at least one reinforcing rib is of an elongated shape.

21. The housing according to claim 19 or 20, wherein the outer wall surface has a first recess, the reinforcing rib being formed on a bottom wall of the first recess.

22. The housing according to claim 21, wherein a height of the reinforcing rib is smaller than or equal to a depth of the first recess.

23. The housing according to claim 21 or 22, wherein the first inner wall surface further has a second recess, the second recess being opposite to the reinforcing rib in a thickness direction of the bottom plate.

24. The housing according to any one of claims 1 to 23, wherein the bottom plate is an integrated stamping part.

25. A battery cell, comprising the housing according to any one of claims 1 to 24.

26. The battery cell according to claim 25, further comprising a cell, wherein:
the cell is accommodated in the accommodation cavity of the housing;
the cell has a bottom wall, a side wall, and a connection wall, the bottom wall and the side wall being connected to each other by the connection wall, and the connection wall extending in a length direction of the transition rounded corner; and
the cell further has a second reference arc-shaped plane tangent to the bottom wall and the side wall, respectively, the connection wall being radially located inside of the second reference arc-shaped plane.

27. A battery, comprising a plurality of battery cells, each of the plurality of battery cells being the battery cell according to claim 25 or 26.

28. An electric device, comprising the battery according to claim 27, the battery being configured to provide electric energy.
